# EUROPÄISCHE PATENTANMELDUNG

(11) **EP 0 982 543 A1**
(43) Veröffentlichungstag der Anmeldung: **01.03.2000**
(21) Anmeldenummer: 98810844.5
(22) Anmeldetag: 26.08.1998
(51) Int. Cl.: F23K 5/12, F02C 3/30, F02C 3/20

(54) **Brennstoff-Wasser Emulsionierung in Gasturbinen**

(71) Anmelder: ABB RESEARCH LTD., 8050 Zürich (CH)
(72) Erfinder: Döbbeling, Klaus, Dr., 5210 Windisch (CH); Eroglu, Adnan, Dr., 5417 Untersiggenthal (CH); Strässle, Richard, 5004 Aarau (CH)
(74) Vertreter: Klein, Ernest

(57) **Zusammenfassung**

Bei einem Verfahren zum Betrieb einer Gasturbine mit wenigstens zwei Brennern (23), wobei flüssiger Brennstoff (30) verwendet wird, und dem flüssigen Brennstoff (30) erste Mittel (31) beigemischt werden, wird eine konstruktionstechnisch einfache aber dennoch effiziente und damit kostengünstige Vermischung von flüssigem Brennstoff (30) und den ersten Mitteln (31) dadurch erreicht, dass die ersten Mittel (31) dem flüssigen Brennstoff (30) vor der Verteilung auf die wenigstens zwei Brenner (23) beigemischt werden.

## Beschreibung

### TECHNISCHES GEBIET

Die vorliegende Erfindung bezieht sich auf das Gebiet der mit flüssigem Brennstoff betriebenen Gasturbinen. Sie betrifft eine Vorrichtung und ein Verfahren zum Betrieb einer Gasturbine mit wenigstens zwei Brennern, wobei flüssiger Brennstoff verwendet wird, und dem flüssigen Brennstoff erste Mittel beigemischt werden.

### STAND DER TECHNIK

Zur Optimierung der Verbrennungscharakteristik von Gasturbinen, aber auch zur Verhinderung von Ablagerungen und Erosionsschäden, werden verschiedenste Additive verwendet, die dem Brennstoff oder den Brennstoffgemischen vor dem Eindüsen in die Brenner beigemischt werden. Zur Verhinderung von Rauchentwicklung und besonders zur Reduktion der Stickoxidemissionen wird bei mit flüssigem Brennstoff betriebenen Gasturbinen häufig Wasser als Additiv verwendet. Das Wasser wird mit dem Brennstoff emulgiert und die Emulsion anschliessend in der Brennkammer verbrannt. Das Wasser führt im wesentlichen zu einer Erniedrigung der lokalen Flammentemperatur im Brenner und damit zu einer Reduktion der Stickoxidbildung. Die Qualität des Vermischungsgrades ist dabei für die Wirksamkeit entscheidend. Da Wasser im Gegensatz zu den meisten Brennstoffen eine polare Verbindung ist, können die beiden Komponenten nur emulgiert werden, und sobald eine wesentliche Separation der Phasen stattfindet, verliert die Beimischung von Wasser den gewünschten Effekt und man beobachtet die gleichen Emissionswerte, wie wenn kein Wasser beigemischt worden wäre.

Entsprechend muss der Vermischungsprozess so vollständig und dauerhaft wie möglich durchgeführt werden. Meist werden dazu sogenannte Düsenmischkammern verwendet. Sie sind unmittelbar vor den Brennern angeordnet und ihre Funktionsweise beruht darauf, dass flüssiger Brennstoff und Wasser separat zugeführt und in einen gemeinsamen Mischraum mit hohem Druck eingedüst werden, so dass die beiden Phasen emulgieren. Die Emulsion wird anschliessend aus dem Mischraum direkt dem Brenner zugeführt.

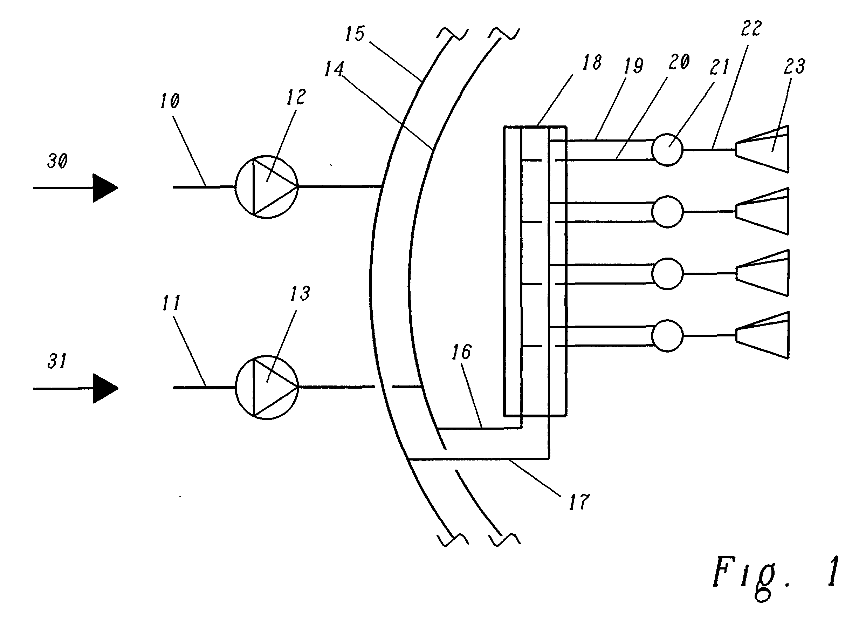

Da die meisten Gasturbinen mehrere Brenner 23 umfassen, wird nach dem Stand der Technik die Zuführung von Brennstoff 30 und Wasser 31 meist so durchgeführt, wie in Figur 1 dargestellt. Es handelt sich beispielsweise um eine Gasturbine mit Ringbrennkammer, bei welcher die Brenner 23 in Gruppen eingeteilt sind. Der flüssige Brennstoff 30 wird über eine Brennstoffzuleitung 10 einer Brennstoffpumpe 12 zugeführt, welche den Brennstoff 30 mit entsprechendem Druck in eine Brennstoffringleitung 15 befördert. Vor der Brennstoffringleitung 15 zweigen Brennstoffgruppenleitungen 17 ab, welche die einzelnen Gruppen von Brennern 23 versorgen. In ähnlicher Weise wird Wasser 31 eingespeist, indem es durch eine Wasserzuleitung 11 einer Wasserpumpe 13 zugeführt wird, welche das Wasser 31 in die Wasserringleitung 14 pumpt, von welcher wiederum Wassergruppenleitungen 16 zu den Gruppen von Brennern 23 abzweigen.

Die Gruppenleitungen 16 und 17 werden einer Verteileinheit 18 zugeführt, von welcher aus die einzelnen Brenner 23 einer Brennergruppe angesteuert werden. Jeder Brenner 23 wird dabei von einer Brennstoffleitung 19 und einer Wasserleitung 20 versorgt. Die Leitungen 19 und 20 münden zunächst in einen Mixer 21, welcher bevorzugt als Düsenmischkammer ausgestaltet ist, und in welchem Wasser 31 und Brennstoff 30 miteinander emulgiert werden. Um die Qualität der Emulsion zu wahren, wird diese nun durch eine kurze Emulsionsleitung 22 dem Brenner 23 möglichst unmittelbar zugeführt und in den Brennraum zwecks Verbrennung eingedüst.

Die Zuführung von Brennstoff und Wasser zu den Brennern nach der obigen Technik weist nun aber einige gravierende Nachteile auf:
■ Für jeden Brenner ist ein Mixer 21 notwendig. Diese Mixer 21 müssen sehr genau gefertigt sein, um eine genügende Emulsionierung der beiden Komponenten gewährleisten zu können und sind entsprechend teuer.
■ Da in den Mixern 21 infolge des Ineinanderdüsens ein grosser Druckabfall nicht zu vermeiden ist, müssen Wasser 31 und Brennstoff 30 unter hohem Druck zugeführt werden. Alle Zuleitungen und anderen Bauteile, welche zwischen den Pumpen 12 und 13 und den Mixern 21 liegen, müssen deshalb auf hohen Druck ausgelegt sein und sind ebenfalls konstruktionstechnisch entsprechend aufwendig auszulegen, und die Zuführung entsprechend ineffizient.
■ Die hohen Druckabfälle an den Ventilen in den Mixern 21 führen durch die damit verbundenen Drücksohläge zu Erosionsproblemen.
■ Der Aufbau der notwendigen Drücke in den Leitungen benötigt viel Energie in den Pumpen und reduziert damit den Gesamtwirkungsgrad der Gasturbine.
■

### DARSTELLUNG DER ERFINDUNG

Der Erfindung liegt demnach die Aufgabe zugrunde, ein Verfahren zur Verfügung zu stellen, welches die Zuführung von Brennstoff und von ersten Mitteln (Additiven wie z.B. Wasser) zu den Brennern erlaubt, ohne die oben genannten Nachteile aufzuweisen.

Diese Aufgabe wird bei einer Vorrichtung der eingangs genannten Art dadurch gelöst, dass die ersten Mittel dem flüssigen Brennstoff vor der Verteilung auf die wenigstens zwei Brenner beigemischt werden. Durch die Vermischung der beiden Komponenten vor der Verteilung auf die Brenner kann im wesentlichen die Hälfte der Leitungen eingespart werden.

Eine erste bevorzugte Ausführungsform der Erfindung zeichnet sich dadurch aus, dass zweite Mittel, welche bevorzugt als Mixer ausgestaltet sein können, den flüssigen Brennstoff und die ersten Mittel vor der Verteilung auf die wenigstens zwei Brenner durchmischen.

Eine weitere Ausführungsform ist dadurch gekennzeichnet, dass die zweiten Mittel den flüssigen Brennstoff und die ersten Mittel gleichzeitig vermischen und zu den Brennern pumpen. Die Verwendung einer Pumpe, welche ohnehin notwendig ist, zur Vermischung der beiden Komponenten ist eine wesentliche weitere Vereinfachung des Aufbaus. Dies insbesondere deswegen, weil die beim Pumpvorgang auftretenden, die Pumpleistung an sich reduzierenden Scherkräfte gleichzeitig zur effizienten Emulsionierung verwendet werden kann.

Eine andere Ausführungsform der Erfindung ist dadurch gekennzeichnet, dass als erstes Mittel Wasser eingesetzt wird. Dies erlaubt eine einfache und gleichzeitig wirksame Beeinflussung der Emissionscharakteristik von Gasturbinen.

Weitere Ausführungsformen des Verfahrens ergeben sich aus den abhängigen Ansprüchen.

Ausserdem wird eine Vorrichtung zur Durchführung des obigen Verfahrens vorgeschlagen, welche dadurch gekennzeichnet ist, dass Zuleitungen vorhanden sind, welche den flüssigen Brennstoff und die ersten Mittel den zweiten Mitteln zuführen, und dass nach Vermischung des flüssigen Brennstoffs und der ersten Mittel in den zweiten Mitteln das Gemisch den Brennern über weitere Leitungen verteilend zugeführt wird. Weiter bevorzugt können die zweiten Mittel als Pumpe, insbesondere als Zentrifugalpumpe oder als mehrstufige Schraubenpumpe ausgelegt sein.

### KURZE ERLÄUTERUNG DER FIGUREN

Die Erfindung soll nachfolgend anhand von Ausführungsbeispielen im Zusammenhang mit den Zeichnungen näher erläutert werden.
- Fig. 1: zeigt eine schematische Darstellung der Brennstoff- und Wasserzuführung in einer Gasturbine nach dem Stand der Technik, und
- Fig. 2: zeigt eine schematische Darstellung der erfindungsgemässen Brennstoff- und Wasserzuführung.

### WEGE ZUR AUSFÜHRUNG DER ERFINDUNG

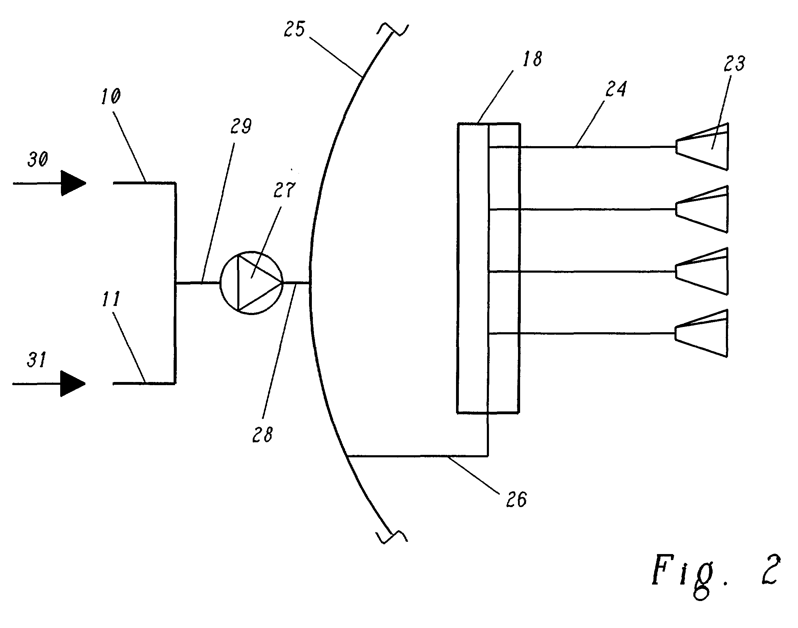

Figur 2 zeigt eine schematische Darstellung eines erfindungsgemässen Ausführungsbeispiels. Brennstoff 30 und Wasser 31 werden über Zuleitungen 10 und 11 zugeführt und schon vor der Pumpe 27 in eine gemeinsame Brennstoff-Wasser-Leitung 29 zusammengeleitet. In dieser Brennstoff-Wasser-Leitung 29 liegen Brennstoff 30 und Wasser 31 noch nicht vermischt, sondern vielmehr im wesentlichen in zwei Phasen vor. Die Brennstoff-Wasser-Leitung 29 mündet in die Pumpe 27, welche die Komponenten sowohl vermischt, als auch befördert. In konventionellen Pumpen 27 treten nämlich normalerweise derart hohe Scherkräfte auf, dass sie gleichzeitig hervorragend als Mixer geeignet sind. Die an sich sonst nur zu Verlusten und Wirkungsgradeinbussen führenden Scherkräfte in den Pumpen können also hier optimal zur Vermischung von Brennstoff und Wasser verwendet werden. Es können für diesen Zweck beispielsweise sowohl Zentrifugalpumpen als auch mehrstufige Schraubenpumpen verwendet werden. Es zeigt sich, dass bei typischen Verhältnissen von Wasser zu Brennstoff von 0.3 bis 1.5 die dabei bewirkte Emulsionierung während wenigstens einer Minute so stabil bleibt, dass die Mischung bei ihrer Verbrennung den gewünschten, stickoxidreduzierenden Effekt zeigt. Selbst bei einer für die hier beschriebenen Anwendungen niedrigen Flussgeschwindigkeit in den Leitungen von ca. 1 m/s kann somit der Pumpe 27 eine Leitungslänge von ca. 60m nachgeschaltet werden, was bei den meisten Gasturbinen für die Zuführung zu den Brennern 23 weitaus genügend ist. Da keine weiteren Mixer 21 mehr notwendig sind, und somit bis zu den Brennern 23 keine signifikanten Druckabfälle mehr auftreten können, ist ausserdem die Auslegung dieser Leitungen auf hohen Druck nicht mehr notwendig. Es können somit einfache Niedrigdruckleitungen verwendet werden.

Entsprechend einfach gestaltet sich deshalb die Zuführung zu den Brennern 23: Über eine Emulsionsleitung 28 wird die Emulsion der Emulsionsringleitung 25 zugeführt, von welcher wiederum Emulsionsgruppenleitungen 26 abzweigen. Die Emulsionsgruppenleitungen 26 münden in die Verteileinheit 18, welche die Emulsion über Emulsionsleitungen 24 direkt den einzelnen Brennern 23 zuführt.

Auf diese Weise kann die Anzahl der Leitungen zwischen Pumpe und Brenner halbiert und auf niedrigen Druck ausgelegt werden. Ausserdem ist nur noch eine Pumpe 27 notwendig. Beide Vereinfachungen führen auf überraschend einfache Weise zu einer Erhöhung des Wirkungsgrades und der Verfügbarkeit einer stickoxidkontrollierten Gasturbine.

### BEZEICHNUNGSLISTE

- 10: Brennstoffzuleitung
- 11: Wasserzuleitung
- 12: Brennstoffpumpe
- 13: Wasserpumpe
- 14: Wasserringleitung
- 15: Brennstoffringleitung
- 16: Wassergruppenleitung
- 17: Brennstoffgruppenleitung
- 18: Verteileinheit
- 19: Brennstoffleitung zum Brenner
- 20: Wasserleitung zum Brenner
- 21: Mixer
- 22: Emulsionsleitung zum Brenner
- 23: Brenner
- 24: Emulsionsleitung zum Brenner
- 25: Emulsionsringleitung
- 26: Emulsionsgruppenleitung
- 27: Pumpe
- 28: Emulsionsleitung
- 29: Brennstoff-Wasser-Leitung
- 30: Brennstoff
- 31: Wasser

## Patentansprüche

1. Verfahren zum Betrieb einer Gasturbine mit wenigstens zwei Brennern (23), wobei flüssiger Brennstoff (30) verwendet wird, und dem flüssigen Brennstoff (30) erste Mittel (31) beigemischt werden, dadurch gekennzeichnet, dass
die ersten Mittel (31) dem flüssigen Brennstoff (30) vor der Verteilung auf die wenigstens zwei Brenner (23) beigemischt werden.

2. Verfahren nach Anspruch 1, dadurch gekennzeichnet, dass zweite Mittel (27) den flüssigen Brennstoff (30) und die ersten Mittel (31) vor der Verteilung auf die wenigstens zwei Brenner (23) durchmischen.

3. Verfahren nach Anspruch 2, dadurch gekennzeichnet, dass die zweiten Mittel (27) den flüssigen Brennstoff (30) und die ersten Mittel (31) durch gegenseitiges Ineinanderdüsen vermischen.

4. Verfahren nach Anspruch 2, dadurch gekennzeichnet, dass die zweiten Mittel (27) den flüssigen Brennstoff (30) und die ersten Mittel (31) gleichzeitig vermischen und zu den Brennern (23) pumpen.

5. Verfahren nach einem der Ansprüche 1 bis 4, dadurch gekennzeichnet, dass die ersten Mittel (31) dafür ausgelegt sind, die Emissionen der Gasturbine wie insbesondere Stickoxid- oder Rauchentwicklung zu beeinflussen.

6. Verfahren nach einem der Ansprüche 1 bis 5, dadurch gekennzeichnet, dass der flüssige Brennstoff (30) und die ersten Mittel (31) unterschiedliche Polarität besitzen und nicht mischbar sondern nur emulsionierbar sind.

7. Verfahren nach Anspruch 6, dadurch gekennzeichnet, dass die ersten Mittel (31) Wasser sind.

8. Verfahren nach Anspruch 7, dadurch gekennzeichnet, dass das Verhältnis von Wasser (31) zu flüssigem Brennstoff (30) im Bereich von 0.3 bis 1.5 liegt.

9. Vorrichtung zur Durchführung eines Verfahrens nach Anspruch 2, dadurch gekennzeichnet, dass Zuleitungen (10,11,27) vorhanden sind, welche den flüssigen Brennstoff (30) und die ersten Mittel (30) den zweiten Mitteln (27) zuführen, und dass nach Vermischung des flüssigen Brennstoffs (30) und der ersten Mittel (30) in den zweiten Mitteln das Gemisch den Brennern über weitere Leitungen (24-26,28) verteilend zugeführt wird.

10. Vorrichtung nach Anspruch 9, dadurch gekennzeichnet, dass die zweiten Mittel (27) als Pumpe ausgebildet sind.

11. Vorrichtung nach Anspruch 10, dadurch gekennzeichnet, dass die Pumpe (27) eine Zentrifugalpumpe ist.

12. Vorrichtung nach Anspruch 11, dadurch gekennzeichnet, dass die Pumpe (27) eine mehrstufige Schraubenpumpe ist.
